# EUROPÄISCHE PATENTSCHRIFT

(11) **EP 1 993 762 B1**
(45) Veröffentlichungstag und Bekanntmachung des Hinweises auf die Patenterteilung: **04.05.2011**
(21) Anmeldenummer: 07711757.0
(22) Anmeldetag: 02.03.2007
(51) Int. Cl.: B23B 27/14, B23B 51/04

(54) **SCHNEIDEINSATZ, BOHRER, VERWENDUNG EINES SCHNEIDEINSATZES IN EINEM BOHRER UND VERFAHREN ZUM BOHREN**
CUTTING INSERT, DRILL, USE OF A CUTTING INSERT IN A DRILL AND METHOD OF DRILLING
INSERT DE COUPE, FORET, UTILISATION D'UN INSERT DE COUPE DANS UN FORET, ET PROCEDE DE FORAGE

(30) Priorität: 09.03.2006 DE 102006010856
(43) Veröffentlichungstag der Anmeldung: 26.11.2008
(73) Patentinhaber: Kennametal Inc., Latrobe, PA 15650-0231 (US)
(72) Erfinder: MERGENTHALER, Peter, Karl, 91477 Markt Bibart (DE); ZEUG, Berthold, Heinrich, 90762 Fürth (DE); JAEGER, Horst, Manfred, 90451 Nürnberg (DE)
(74) Vertreter: FDST Patentanwälte
(86) Internationale Anmeldenummer: PCT/EP2007/001798
(87) Internationale Veröffentlichungsnummer: WO 2007/101615

(56) Entgegenhaltungen:
- EP-A1- 0 133 168
- GB-A- 2 016 316
- US-A- 4 297 058

## Beschreibung

Die Erfindung betrifft einen Schneideinsatz für einen Bohrer mit den Merkmalen des Oberbegriffs des Anspruchs 1, ein Bohrwerkzeug mit den Merkmalen des Oberbegriffs des Anspruchs 9, eine Verwendung eines Schneideinsatzes mit den Merkmalen des Anspruchs 11 sowie ein Verfahren zum Bohren mit den Merkmalen des Anspruchs 12.

Ein derartiger Bohrschneideinsatz und ein derartiges Bohrwerkzeug sowie eine derartige Verwendung und ein derartiges Verfahren sind beispielsweise zu entnehmen aus GB 2 016 316 A.

Derartige Wendeschneidplatten weisen beispielsweise eine dreieckige, viereckige, vorzugsweise quadratische, fünfeckige oder sechseckige Umrissform auf. Die zwischen den Ecken befindlichen Kanten sind hierbei als Schneiden ausgebildet. Die Wendeschneidplatte ist im Plattensitz eines Bohrwerkzeugs oder einer in ein Bohrwerkzeug einzusetzenden Kassette so angeordnet, dass eine der Kanten während des Bohrvorgangs schneidet, während die übrigen Kanten inaktiv im Plattensitz einliegen. Nach dem Verschleiß der aktiven, schneidenden Kante wird die Wendeschneidplatte einfach aus dem Plattensitz gelöst und so verschwenkt, dass eine der bisher inaktivierten Schneiden aktiviert wird, also mit ihr die nächsten Bohrvorgänge durchgeführt werden. Dieses Verdrehen der Wendeschneidplatte im Plattensitz erfolgt so lange, bis sämtliche Kanten der Wendeschneidplatte verbraucht sind und damit die gesamte Wendeschneidplatte verschlissen ist.

Es ist weiterhin bekannt, in einem Bohrwerkzeug mehrere Wendeschneidplatten anzuordnen. Bevorzugt werden die Wendeschneidplatten aus Hartmetallen gefertigt. Beim Einsatz mehrerer Wendeschneidplatten werden beispielsweise zwei oder auch mehrere Wendeschneidplatten so am Bohrer angeordnet, dass sie gemeinsam die Hauptschneide des Bohrers bilden. Es sind auch Konfigurationen bekannt, bei welchen die Wendeschneidplatten versetzt zueinander an der Hauptschneide angeordnet sind.

Mit den Wendeschneidplatten ist es also möglich, eine oder mehrere Schneiden des Bohrers durch Wendeschneidplatten zu substituieren.

Wenn nachfolgend von Schneideinsätzen die Rede ist, beziehen sich die Angaben auf einen Schneideinsatz mit einer Schneide. Das zum Schneideinsatz Gesagte kann natürlich jederzeit auch auf eine Wendeschneidplatte übertragen werden, die sich vom einschneidigen Schneideinsatz - wie gesagt - dadurch unterscheidet, dass mehrere Schneiden zugleich an der Platte vorhanden sind. Es sind Schneideinsätze bekannt, bei welchen die Schnittaufteilung am Bohrungsgrund in eine gerade Anzahl von Schneiden aufgeteilt ist. Die eine Hälfte der Schneiden bearbeitet den Bohrungsgrund bei diesen Werkzeugen im Bereich des Bohrungszentrums. Die andere Hälfte der Schneiden hingegen bearbeitet den zum Außendurchmesser hin gewandten Bereich des Bohrungsgrundes. Diese Schnittaufteilung bewirkt eine Aufteilung der Schnittkräfte. Es entsteht so eine Innenschneide und eine Außenschneide an jedem Schneideinsatz. Diese Innenschneide und Außenschneide stehen bevorzugt in einem Winkel zueinander. Sie bilden also eine winkelförmige Schneide, welche aus einer Innenschneide und einer Außenschneide besteht. Für bestimmte Anwendungsfälle kann auch eine entartete winkelförmige Schneide eingesetzt werden, bei der die Außen- und Innenschneide zueinander unter einem Winkel von 180° orientiert sind. In diesem Fall wird der Schneideinsatz derart im Plattensitz angeordnet, dass die Schneide schräg mit dem zu bearbeitenden Werkstück in Eingriff kommt.

Idealerweise sind die Innenschneide und die Außenschneide so zueinander.proportioniert, dass ein einseitiges Abdrängen des Werkzeugs gegenüber der Bohrachse wirksam vermieden ist. Aufgrund der im Werkzeugbau jedoch unvermeidlichen Fertigungstoleranzen ist es in der Praxis kaum möglich, einen Schneideinsatz so zu fertigen, dass das geschilderte einseitige Abdrängen des Werkzeugs vollständig ausgeschlossen ist. Beim Einsatz mehrerer Schneideinsätze kommt das Problem hinzu, dass sich die Toleranzfehler im schlechtesten Fall addieren, was zu einer Verstärkung der Abdrängneigung des Werkzeugs führt. Aufgrund der dann wirksamen Abdrängkraftkomponente läuft das Bohrwerkzeug im Einsatz instabil, was zu schlechten Bohrungsqualitäten und zu einem frühen Ausfall des Werkzeugs führt.

Durch die geschilderte winkelförmige bzw. dachförmige Anordnung von Innenschneide und Außenschneide zueinander ist das Abdrängverhalten des Werkzeugs zwar bereits verbessert. Um das Abdrängen des Werkzeugs wirksam zu verhindern ist es eigentlich erforderlich, den Winkel, welchen die Innenschneide und die Außenschneide miteinander bilden, möglichst spitz zu gestalten. Dies zieht jedoch eine ungünstige Spanform nach sich. Außerdem wird dadurch die Schneideneingriffslänge vergrößert. Dies führt wiederum zu einem unerwünschten Anstieg der Schnittkräfte und zu einer Vergrößerung der Anschnitttiefe. Aus der DE-T-694 16 248 ist eine Wendeplatte bekannt, bei der die Außenschneide und die Innenschneide in zwei Teilschneiden mit verschiedenen Winkeln aufgeteilt sind. Bei dieser Schneidplatte sind den eigentlichen Schneiden nach Art eines Stechwerkzeugs somit Vorschneiden vorgeschaltet. Diese Anordnung der Schneiden führt jedoch zu einer unerwünschten Spanform, nämlich zu Bandspänen.

Ausgehend von diesen Nachteilen liegt der Erfindung die Aufgabe zugrunde, das Abdrängverhalten zu verbessern. Diese Aufgabe ist jeweils durch die Merkmalskombination der Ansprüche 1, 9, 11 und 12 in erfinderischer Weise gelöst. Die Unteransprüche beinhalten teilweise zweckmäßige und teilweise für sich selbst erfinderische Weiterbildungen der Erfindung.

Nach Anspruch 1 sind bei dem erfindungsmäßigen Schneideinsatz eine Innenschneide und eine Außenschneide vorgesehen. Diese Innenschneide und die Außenschneide bilden die Schenkel eines Winkels. Der Schneideinsatz weist also eine winkelförmige Schneide auf. Im Bereich des Scheitels des die Schneide bildenden Winkels ist nach der Erfindung eine noppenförmige Auswölbung angebracht. Diese Auswölbung zentriert die Schneide beim Bohrvorgang zusätzlich. Die Auswölbung hat nur eine sehr kurze Länge und bedeckt nur den Scheitel des von der Innenschneide und der Außenschneide gebildeten Winkels. Auch springt die Auswölbung nicht sehr weit aus der Schneide des Schneideinsatzes hervor. Die Auswölbung dient gewissermaßen als Zentrierspitze für die Schneide während des Bohrvorgangs. Die wesentliche Schneidarbeit leisten weiterhin die der Auswölbung benachbarte Innenschneide einerseits und Außenschneide andererseits, während die Auswölbung neben einer schneidenden Funktion auch eine Zentrierfunktion für das Werkzeug während des Bohrvorgangs hat.

Die Seitenflanken der Auswölbung bilden weiterhin jeweils eine Wölbungsschneide. Die der Innenschneide benachbarte Wölbungsinnenschneide mündet direkt in der Innenschneide aus. Ebenso mündet die Wölbungsaußenschneide in die Außenschneide aus. Zwischen den beiden Wölbungsschneiden der Innenschneide und der Außenschneide findet also ein kontinuierlicher, versatzfreier Übergang statt. Hierdurch wird beim Schneiden ein über die gesamte Schneide hinweg durchgehender Span gebildet und es tritt kein Spanbruch im Übergangsbereich zwischen dem Wölbungsschneiden und der Innen- bzw. Außenschneide auf. Sowohl die Wölbungsschneiden als auch die Innen- und Außenschneiden bilden vorzugsweise jeweils ein dachförmiges Schneidenpaar, das zwischen sich einen Winkel kleiner 180° einschließt. In alternativen Ausgestaltungen sind die Innen- und Außenschneide unter einem Winkel von 180° oder unter einem Winkel größer 180° angeordnet, wobei hier gleichzeitig die Wölbungsschneiden dachförmig mit einem Winkel kleiner 180° angeordnet sind.

In bevorzugter Ausgestaltung ist der Innenwinkel zwischen der Wölbungsinnenschneide und der Wölbungsaußenschneide kleiner als der Winkel zwischen der Innenschneide und der Außenschneide. Auf diese Weise setzen die Innenschneide und die Außenschneide den Verlauf der Wölbungsinnenschneide und der Wölbungsaußenschneide jeweils als flacher Auslauf fort. Besonders ist darauf hinzuweisen, dass zwischen den Wölbungsschneiden und der Innenschneide und der Außenschneide kein Richtungswechsel innerhalb der Schneide stattfindet. Die Schneide ist also völlig hinterschneidungsfrei. Auch existiert kein 90°-Winkel innerhalb der Schneide. Vielmehr hat die Schneide einen kontinuierlich winkelförmigen Verlauf mit der Auswölbung im Bereich des Scheitelpunkts der Schneide.

In weiterer bevorzugter Ausgestaltung ist der Bereich zwischen der Wölbungsinnenschneide und der Wölbungsaußenschneide als Noppennase ausgerundet.

Bevorzugt ist ein symmetrischer Aufbau der gesamten Schneide. Dies erlaubt den problemlosen Wechsel der Schneidplatte und insbesondere den Einsatz sowohl bei einem links drehenden als auch bei einem rechts drehenden Werkzeug. Die gesamte Schneide ist somit symmetrisch um die Auswölbung angeordnet. Die Länge der Innenschneide entspricht exakt der Länge der Außenschneide. Dasselbe gilt für die Wölbungsschneiden, sofern solche vorgesehen sind.

In speziellen Anwendungsfällen führt ein symmetrischer Aufbau zu einer unausgeglichenen Krafteinleitung in den Schneideinsatz beim Schneiden. Für derartige Fälle ist vorzugsweise ein unsymmetrischer Aufbau vorgesehen, d.h. die Schneiden sind unterschiedlich lang und/oder unterschiedlich geneigt ausgebildet. Die Unsymmetrie ist dabei derart gewählt, dass die beim Schneiden auf den Schneideinsatz einwirkenden Kräfte in Radialrichtung, also in Richtung senkrecht zur Schnittrichtung, sich wechselseitig aufheben, so dass keine resultierende Radialkraft auf den Bohrer einwirkt.

Um den Schneideinsatz sowohl bei einem links drehenden als auch bei einem rechts drehenden Werkzeug verwenden zu können bzw. um die Drehrichtung des Werkzeugs ändern zu können, ist im Bereich der der Auswölbung zugeordneten Freifläche ein Freigang vorzugsweise angeordnet.

Besonders bevorzugt ist - wie bereits ausgeführt - die Verwendung eines als Wendeschneidplatte aufgebauten Schneidwerkzeugs mit mehreren Schneiden. Besonders vorteilhaft ist die Doppelfunktion der Auswölbung bei einer Wendeschneidplatte. Während die Auswölbung der aktiven Schneide der vorstehend erläuterten Verbesserung des Bohrverhaltens dient, ragt die Auswölbung einer inaktiven Schneide bei montierter Wendeschneidplatte in das zwischen den Schneidkörperanlageflächen des Plattensitzes zwangsläufig angeordnete Eckloch hinein und verhindert so ein Verklemmen von Spänen in diesem Eckloch. Die im Eckloch einliegende Auswölbung dient also als Füllkörper für das Eckloch.

Anhand eines Ausführungsbeispiels ist die Erfindung weiter beschrieben. Es zeigen:

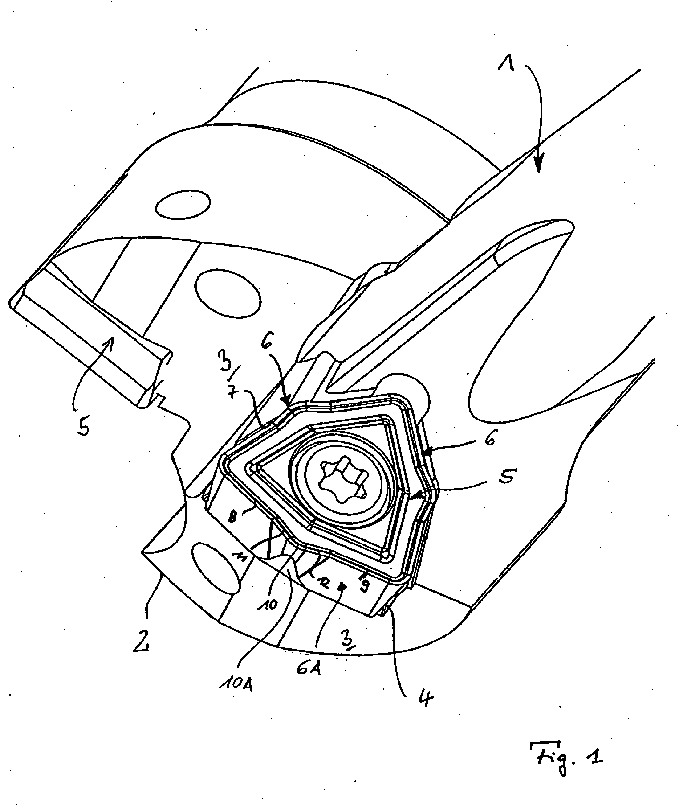

- Fig. 1: die Bohrspitze eines Bohrwerkzeugs mit einer eingesetzten Wende- schneidplatte,

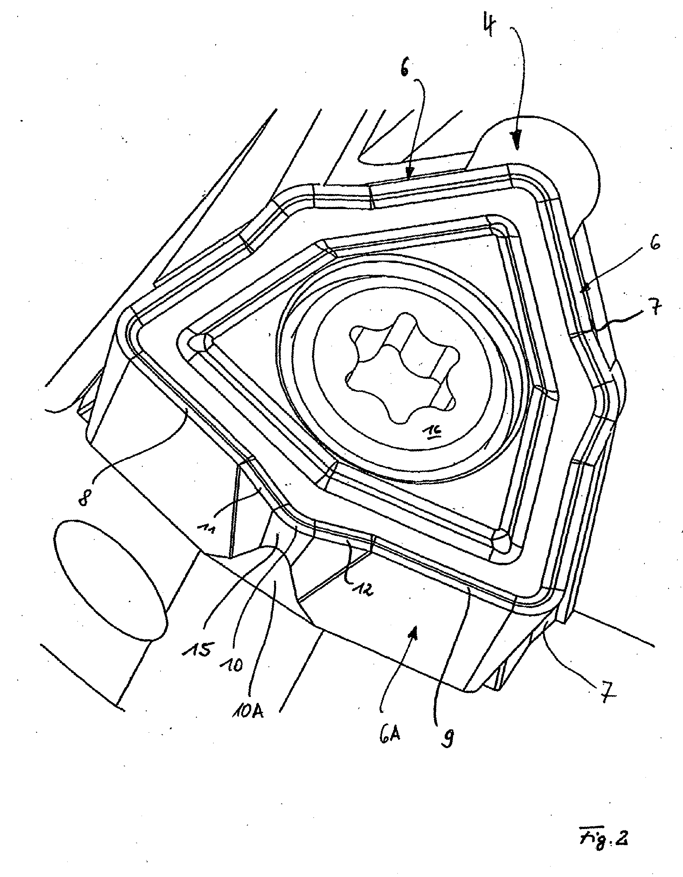

- Fig. 2: die Wendeschneidplatte im Plattensitz des Bohrwerkzeugs gemäß Fig. 1 in vergrößerter Darstellung,
- Fig. 3: eine Draufsicht auf die im Plattensitz einliegende Wendeschneidplatte,
- Fig. 4: eine Umrissskizze der erfindungsmäßigen Wendeschneidplatte mit den an der Wendeschneidplatte realisierten Winkelverhältnissen und

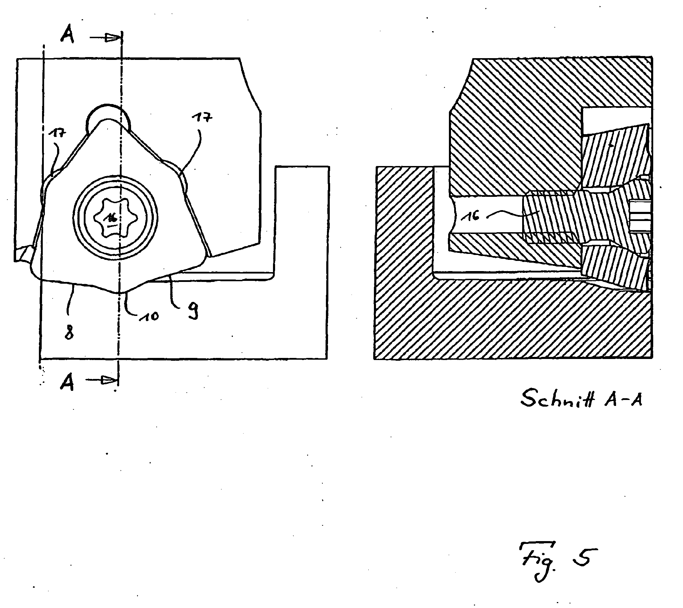

- Fig. 5: eine in einem Plattensitz einliegende Wendeschneidplatte sowie einen Schnitt durch die Wendeschneidplatte.

Der Bohrer 1 hat eine Bohrspitze 2. Die Stirnseite dieser Bohrspitze 2 weist zwei Hauptfreiflächen 3 auf. Die Hauptfreiflächen 3 grenzen jeweils an einen Plattensitz 4 zur Aufnahme eines als Wendeschneidplatte ausgeführten Schneideinsatzes 5. Der im Ausführungsbeispiel dargestellte Schneideinsatz 5 hat eine nahezu dreieckige Umrissform. Die Seiten dieser dreieckigen Umrissform wirken jeweils als Schneide 6. An den Schneiden 6 grenzen jeweils Seitenflächen 6A an, mit denen der Schneideinsatz 5 jeweils an einer Schneidkörperanlagefläche 7 des Plattensitzes 4 anliegt.

Die nicht zu den Schneidkörperanlageflächen 7 orientierte Schneide 6 bildet die aktive Schneide des Schneidkörpers 5. Die aktive Schneide des Schneidkörpers 5 gliedert sich wiederum auf in eine Innenschneide 8 und eine Außenschneide 9. Zwischen der Innenschneide 8 und der Außenschneide 9 ist die Auswölbung 10 angeordnet. An der Seitenfläche 6A unterhalb der Auswölbung 10 ist ein nach Art eines Rücksprungs gebildeter Freigang 10A vorgesehen.

Die Flanken der Auswölbung 10 sind als Wölbungsschneiden wirksam. Die der Innenschneide 8 benachbarte Flanke der Auswölbung 10 bildet somit die Wölbungsinnenschneide 11 und die der Außenschneide 9 zugeordnete Flanke der Auswölbung 10 entsprechend die Wölbungsaußenschneide 12.

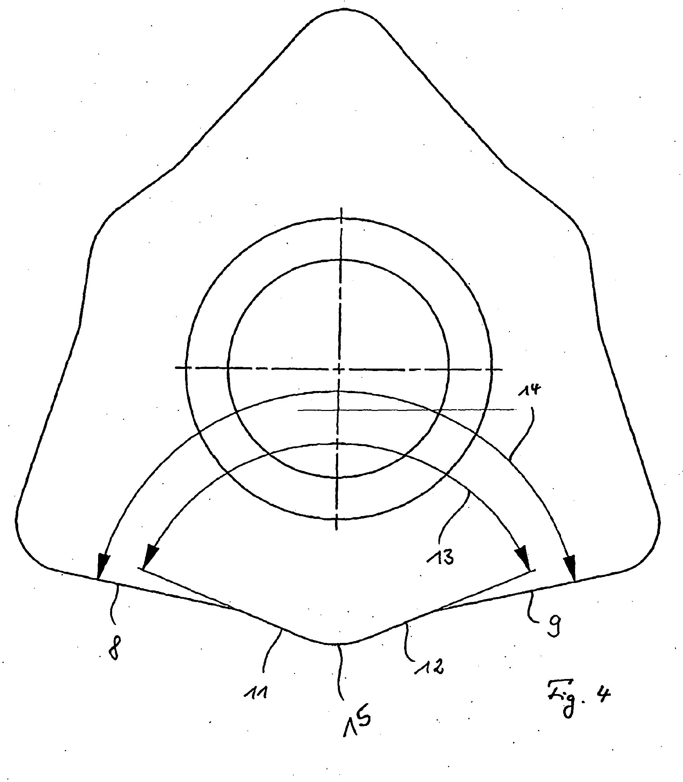

Aus der Darstellung der Fig. 4 ist ersichtlich, dass der Innenwinkel 13 zwischen der Wölbungsinnenschneide 11 und der Wölbungsaußenschneide 12 kleiner ist als der von der Innenschneide 8 und der Außenschneide 9 gebildete Winkel 14 der winkelförmigen Schneide 6. Der Innenwinkel 13 zwischen der Wölbungsinnenschneide 11 und der Wölbungsaußenschneide 12 weist vorteilhaft einen Betrag zwischen 60° als Minimum und 170° als Maximum auf. Im Ausführungsbeispiel beträgt der Innenwinkel 13 120° und der Winkel 14 zwischen der Innenschneide 8 und der Außenschneide 9 150°. Die Innenschneide 8 und die Außenschneide 9 gehen unter einem stumpfen Winkel in die Wölbungsinnenschneide 11 bzw. in die Wölbungsaußenschneide 12 über. Der stumpfe Winkel beträgt im Ausführungsbeispiel etwa 170° und liegt insbesondere über 150°. Im Ausführungsbeispiel ist schließlich der Bereich zwischen der Wölbungsinnenschneide 11 und der Wölbungsaußenschneide 12 an der Auswölbung 10 als Noppennase 15 gestaltet.

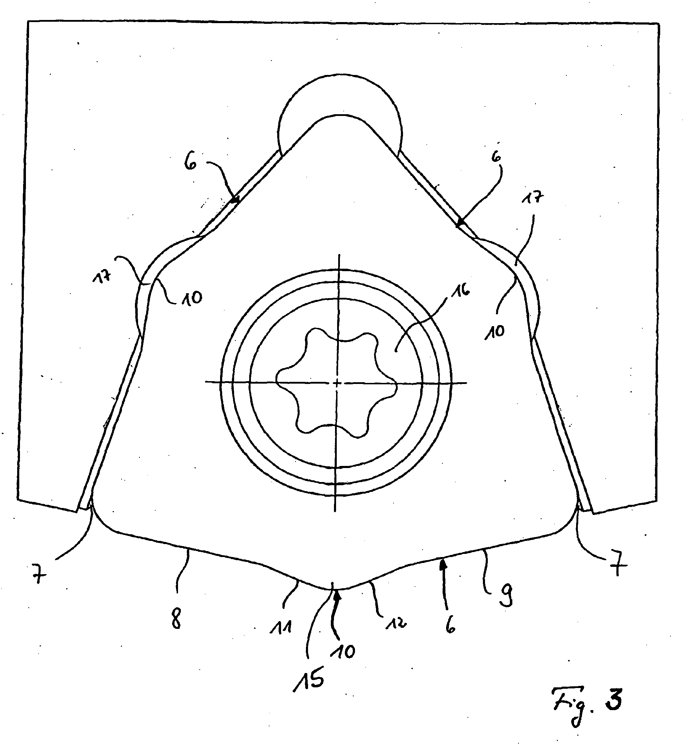

In den Zeichnungen erkennbar ist des Weiteren eine Halteschraube 16 zur Fixierung des Schneideinsatzes 5 im Plattensitz 4. Des Weiteren ist erkennbar (Fig. 3), dass die Auswölbungen 10 der inaktiven Schneiden 6 in Ecklöcher 17 im Bereich der Schneidkörperanlageflächen 7 hineinragen und diese zumindest teilweise verschließen. Auf diese Weise ist ein Verfüllen dieser Ecklöcher 17 mit Spänen wirksam verhindert.

## Patentansprüche

1. Bohrschneideinsatz (5) mit einer nahezu dreieckförmigen Umrissform, deren Seiten jeweils als Schneide (6) wirken, wobei die Schneide (6) jeweils winkelförmig ist und eine Innenschneide (8) und eine Außenschneide (9) aufweist, welche die Schenkel eines Winkels (14) der winkelförmigen Schneide (6) bilden, wobei der Winkel (14) kleiner 180° ist,
**dadurch gekennzeichnet,**
**dass** am Scheitel des Winkels (14) eine als noppenförmige Auswölbung (10) ausgebildete Zentrierspitze vorgesehen ist und die Seitenflanken der Auswölbung (10) jeweils eine Wölbungsschneide (11,12) bilden, die in die Innenschneide (8) und die Außenschneide (9) direkt ausmünden.

2. Bohrschneideinsatz (5) nach Anspruch 1,
**gekennzeichnet durch**
eine in die Innenschneide (8) ausmündende Wölbungsinnenschneide (11) und **durch** eine in die Außenschneide (9) ausmündende Wölbungsaußenschneide (12) derart, dass der Innenwinkel (13) der Wölbungsinnenschneide (11) und der Wölbungsaußenschneide (12) kleiner ist als der Winkel (14) der Innenschneide (8) und der Außenschneide (9).

3. Bohrschneideinsatz (5) nach Anspruch 1 oder 2,
**gekennzeichnet durch**
einen als Noppennase (15) ausgerundeten Scheitelpunkt des Innenwinkels (13) zwischen Wölbungsinnenschneide (11) und Wölbungsaußenschneide (12).

4. Bohrschneideinsatz (5) nach einem der vorhergehenden Ansprüche,
**gekennzeichnet durch**
eine symmetrische Anordnung der Innenschneide (8) und der Außenschneide (9) sowie der Wölbungsinnenschneide (11) und der Wölbungsaußenschneide (12) zueinander.

5. Bohrschneideinsatz (5) nach Anspruch 4,
**dadurch gekennzeichnet,**
**dass** die Innenschneide (8), die Außenschneide (9) sowie die Wölbungsinnenschneide (11) und die Wölbungsaußenschneide (12) symmetrisch zur Noppennase (15) angeordnet sind.

6. Bohrschneideinsatz (5) nach einem der Ansprüche 1 bis 3,
**gekennzeichnet durch**
eine unsymmetrische Anordnung der Schneiden (8,9,11,12) zueinander derart, dass sich im Betrieb die auftretenden Schnittkräfte aufheben.

7. Bohrschneideinsatz (5) nach einem der vorhergehenden Ansprüche,
**gekennzeichnet durch**
einen Freigang im Bereich der der Auswölbung (10) zugeordneten Freifläche.

8. Bohrschneideinsatz (5) nach einem der vorhergehenden Ansprüche als Wendeplatte mit zwei oder mehreren Schneiden (6).

9. Bohrwerkzeug (1) mit einem Schneideinsatz (5), wobei der Schneideinsatz (5) mindestens eine Innenschneide (8) und eine Außenschneide (9) aufweist, welche die Schenkel eines Winkels (14) einer winkelförmigen Schneide (6) bilden,
**dadurch gekennzeichnet,**
**dass** am Scheitel des Winkels (14) eine noppenförmige Auswölbung (10) vorgesehen ist und die Seitenflanken der Auswölbung (10) jeweils eine Wölbungsschneide (11,12) bilden, die in die Innenschneide (8) und die Außenschneide (9) direkt ausmünden
wobei der Schneideinsatz (5) in einem Plattensitz (4) derart angeordnet ist, dass die noppenförmige Auswölbung (10) als Zentrierspitze für die Schneide (6) nach vorne gerichtet ist.

10. Bohrwerkzeug (1) nach Anspruch 9,
**dadurch gekennzeichnet,**
**dass** der Schneideinsatz (5) als Wendeschneidplatte konfiguriert ist und im Plattensitz (4) so angeordnet ist, dass mindestens eine Auswölbung (10) einer inaktiven Schneide (6) in ein zwischen zwei Schneidkörperanlageflächen (7) des Plattensitzes (4) angeordnetes Eckloch (17) zumindest teilweise hineinreicht.

11. Verwendung eines Schneideinsatz (5) in einem Bohrwerkzeug (1), wobei der Schneideinsatz (5) mindestens eine Innenschneide (8) und eine Außenschneide (9) aufweist, welche die Schenkel eines Winkels (14) einer winkelförmigen Schneide (6) bilden,
**dadurch gekennzeichnet,**
**dass** am Scheitel des Winkels (14) eine noppenförmige Auswölbung (10) vorgesehen ist und die Seitenflanken der Auswölbung (10) jeweils eine Wölbungsschneide (11,12) bilden, die in die Innenschneide (8) und die Außenschneide (9) direkt ausmünden, wobei die Auswölbung (10) beim Bohrvorgang als Zentrierspitze eingesetzt wird.

12. Verfahren zum Bohren mit einem einen Schneideinsatz (5) aufweisenden Bohrwerkzeug, wobei der Schneideinsatz (5) mindestens eine Innenschneide (8) und eine Außenschneide (9) aufweist, welche die Schenkel eines Winkels (14) einer winkelförmigen Schneide (6) bilden,
**dadurch gekennzeichnet,**
**dass** am Scheitel des Winkels (14) eine noppenförmige Auswölbung (10) vorgesehen ist und die Seitenflanken der Auswölbung (10) jeweils eine Wölbungsschneide (11,12) bilden, die in die Innenschneide (8) und die Außenschneide (9) direkt ausmünden, wobei die Auswölbung (10) beim Bohrvorgang als Zentrierspitze eingesetzt wird.

## Claims

1. Drilling cutting insert (5) having a virtually triangular outer contour, the sides of which respectively act as a cutting edge (6), the cutting edge (6) respectively being angular and having an inner cutting edge (8) and an outer cutting edge (9) which form the sides of the angle (14) of the angular cutting edge (6), the angle (14) being less than 180°, **characterized in that** a centring tip configured as a pimple-shaped bulge (10) is provided at the vertex of the angle (14) and the side flanks of the bulge (10) form respective bulge cutting edges (11, 12) which lead out directly into the inner cutting edge (8) and the outer cutting edge (9).

2. Drilling cutting insert (5) according to Claim 1, **characterized by** a bulge inner cutting edge (11), leading out into the inner cutting edge (8), and by a bulge outer cutting edge (12), leading out into the outer cutting edge (9), such that the inner angle (13) of the bulge inner cutting edge (11) and of the bulge outer cutting edge (12) is smaller than the angle (14) of the inner cutting edge (8) and of the outer cutting edge (9).

3. Drilling cutting insert (5) according to Claim 1 or 2, **characterized by** a vertex, rounded off as a pimple nose (15), of the inner angle (13) between bulge inner cutting edge (11) and bulge outer cutting edge (12).

4. Drilling cutting insert (5) according to one of the preceding claims, **characterized by** a symmetrical arrangement of the inner cutting edge (8) and of the outer cutting edge (9) and also of the bulge inner cutting edge (11) and of the bulge outer cutting edge (12) relative to one another.

5. Drilling cutting insert (5) according to Claim 4, **characterized in that** the inner cutting edge (8), the outer cutting edge (9) and also the bulge inner cutting edge (11) and the bulge outer cutting edge (12) are arranged symmetrically to the pimple nose (15).

6. Drilling cutting insert (5) according to one of Claims 1 to 3, **characterized by** an asymmetrical arrangement of the cutting edges (8, 9, 11, 12) relative to one another such that the cutting forces that occur during operation cancel each other out.

7. Drilling cutting insert (5) according to one of the preceding claims, **characterized by** a clearance portion in the region of the flank assigned to the bulge (10).

8. Drilling cutting insert (5) according to one of the preceding claims as an indexable insert having two or more cutting edges (6).

9. Drilling tool (1) having a cutting insert (5), the cutting insert (5) having at least one inner cutting edge (8) and one outer cutting edge (9) which form the sides of an angle (14) of an angular cutting edge (6), **characterized in that** a pimple-shaped bulge (10) is provided at the vertex of the angle (14) and the side flanks of the bulge (10) form respective bulge cutting edges (11, 12) which lead out directly into the inner cutting edge (8) and the outer cutting edge (9), the cutting insert (5) being arranged in an insert seat (4) in such a way that the pimple-shaped bulge (10) is directed forwards as a centring tip for the cutting edge (6).

10. Drilling tool (1) according to Claim 9, **characterized in that** the cutting insert (5) is configured as an indexable insert and is arranged in the insert seat (4) in such a way that at least one bulge (10) of an inactive cutting edge (6) extends at least partly into a corner hole (17) arranged between two cutting-body bearing surfaces (7) of the insert seat (4).

11. Use of a cutting insert (5) in a drilling tool (1), the cutting insert (5) having at least one inner cutting edge (8) and one outer cutting edge (9) which form the sides of an angle (14) of an angular cutting edge (6), **characterized in that** a pimple-shaped bulge (10) is provided at the vertex of the angle (14) and the side flanks of the bulge (10) form respective bulge cutting edges (11, 12) which lead out directly into the inner cutting edge (8) and the outer cutting edge (9), the bulge (10) being used as centring tip during the drilling operation.

12. Method for drilling with a drilling tool having a cutting insert (5), the cutting insert (5) having at least one inner cutting edge (8) and one outer cutting edge (9) which form the sides of an angle (14) of an angular cutting edge (6), **characterized in that** a pimple-shaped bulge (10) is provided at the vertex of the angle (14) and the side flanks of the bulge (10) form respective bulge cutting edges (11, 12) which lead out directly into the inner cutting edge (8) and the outer cutting edge (9), the bulge (10) being used as centring tip during the drilling operation.

## Revendications

1. Insert de coupe de perçage (5), comprenant une forme en projection approximativement triangulaire, dont les côtés servent à chaque fois de tranchant (6), le tranchant (6) étant à chaque fois coudé et présentant un tranchant interne (8) et un tranchant externe (9), qui forment les branches d'un angle (14) du tranchant coudé (6), l'angle (14) étant inférieur à 180°,
**caractérisé en ce**
**qu'**il est prévu au sommet de l'angle (14) une pointe de centrage réalisée sous forme de bombement (10) en forme de bouton, et les flancs latéraux du bombement (10) forment à chaque fois un tranchant de bombement (11, 12), lesquels tranchants de bombement se prolongent directement dans le tranchant interne (8) et le tranchant externe (9).

2. Insert de coupe de perçage (5) selon la revendication 1,
**caractérisé par**
un tranchant (11) interne de bombement se prolongeant dans le tranchant interne (8) et par un tranchant externe de bombement (12) se prolongeant dans le tranchant externe (9), de telle sorte que l'angle interne (13) du tranchant interne de bombement (11) et du tranchant externe de bombement (12) soit inférieur à l'angle (14) du tranchant interne (8) et du tranchant externe (9).

3. Insert de coupe de perçage (5) selon la revendication 1 ou 2,
**caractérisé par**
un sommet de l'angle interne (13) arrondi en forme de nez de bouton (15), entre le tranchant interne de bombement (11) et le tranchant externe de bombement (12).

4. Insert de coupe de perçage (5) selon l'une quelconque des revendications précédentes,
**caractérisé par**
un agencement symétrique du tranchant interne (8) et du tranchant externe (9) ainsi que du tranchant interne de bombement (11) et du tranchant externe de bombement (12) l'un par rapport à l'autre.

5. Insert de coupe de perçage (5) selon la revendication 4,
**caractérisé en ce que**
le tranchant interne (8), le tranchant externe (9) ainsi que le tranchant interne de bombement (11) et le tranchant externe de bombement (12) sont disposés symétriquement par rapport au nez de bouton (15).

6. Insert de coupe de perçage (5) selon l'une quelconque des revendications 1 à 3,
**caractérisé par**
un agencement asymétrique des tranchants (8, 9, 11, 12) l'un par rapport à l'autre de telle sorte que les forces de découpe se produisant pendant le fonctionnement se compensent.

7. Insert de coupe de perçage (5) selon l'une quelconque des revendications précédentes,
**caractérisé par**
une course libre dans la région de la surface libre associée au bombement (10).

8. Insert de coupe de perçage (5) selon l'une quelconque des revendications précédentes, en tant que plaque réversible avec deux ou plusieurs tranchants (6).

9. Outil de perçage (1) comprenant un insert de coupe (5), l'insert de coupe (5) présentant au moins un tranchant interne (8) et un tranchant externe (9), qui forment les branches d'un angle (14) d'un tranchant coudé (6),
**caractérisé en ce**
**qu'**au sommet de l'angle (14) est prévu un bombement (10) en forme de bouton, et les flancs latéraux du bombement (10) forment à chaque fois un tranchant de bombement (11, 12), lesquels tranchants de bombement se prolongent directement dans le tranchant interne (8) et dans le tranchant externe (9),
l'insert de coupe (5) étant disposé dans un siège de la plaque (4) de telle sorte que le bombement (10) en forme de bouton soit orienté vers l'avant en tant que pointe de centrage pour le tranchant (6) .

10. Outil de perçage (1) selon la revendication 9,
**caractérisé en ce que**
l'insert de coupe (5) est configuré sous forme de plaque de coupe réversible, et est disposé dans le siège de plaque (4) de telle sorte qu'au moins un bombement (10) d'un tranchant (6) inactif pénètre au moins en partie dans un trou angulaire (17) disposé entre deux surfaces d'appui de corps de coupe (7) du siège de plaque (4).

11. Utilisation d'un insert de coupe (5) dans un outil de perçage (1), l'insert de coupe (5) présentant au moins un tranchant interne (8) et un tranchant externe (9), qui forment les branches d'un angle (14) d'un tranchant (6) coudé,
**caractérisée en ce**
**qu'**au sommet de l'angle (14) est prévu un bombement (10) en forme de bouton, et les flancs latéraux du bombement (10) forment à chaque fois un tranchant de bombement (11, 12), lesquels tranchants de bombement se prolongent directement dans le tranchant interne (8) et le tranchant externe (9), le bombement (10) étant utilisé lors de l'opération de perçage en tant que pointe de centrage.

12. Procédé de perçage avec un outil de perçage présentant un insert de coupe (5), l'insert de coupe (5) présentant au moins un tranchant interne (8) et un tranchant externe (9), qui forment les branches d'un angle (14) d'un tranchant coudé (6),
**caractérisé en ce**
**qu'**au sommet de l'angle (14) est prévu un bombement (10) en forme de bouton et les flancs latéraux du bombement (10) forment à chaque fois un tranchant de bombement (11, 12), lesquels tranchants de bombement se prolongent directement dans le tranchant interne (8) et le tranchant externe (9), le bombement (10) étant utilisé lors de l'opération de perçage en tant que pointe de centrage.
